Europäisches Patentamt

European Patent Office

Office européen des brevets

(11) Veröffentlichungsnummer : **0 360 819 B1**

(12) # EUROPÄISCHE PATENTSCHRIFT

(45) Veröffentlichungstag der Patentschrift :
**29.01.92 Patentblatt 92/05**

(51) Int. Cl.⁵ : **F16D 27/10, F01P 7/08**

(21) Anmeldenummer : **88904221.4**

(22) Anmeldetag : **18.05.88**

(86) Internationale Anmeldenummer :
**PCT/EP88/00425**

(87) Internationale Veröffentlichungsnummer :
**WO 88/09447 01.12.88 Gazette 88/26**

(54) **ANTRIEB FÜR EIN LÜFTERRAD.**

(30) Priorität : **27.05.87 DE 3717821**

(43) Veröffentlichungstag der Anmeldung :
**04.04.90 Patentblatt 90/14**

(45) Bekanntmachung des Hinweises auf die
Patenterteilung :
**29.01.92 Patentblatt 92/05**

(84) Benannte Vertragsstaaten :
**AT DE FR GB IT NL SE**

(56) Entgegenhaltungen :
**DE-A- 3 443 524**

(56) Entgegenhaltungen :
**DE-B- 1 131 946**
**FR-A- 1 230 875**
**US-A- 2 452 264**
**US-A- 2 738 045**
**US-A- 2 820 440**
**Patent Abstracts of Japan, vol. 9. no. 103,**
**(M-377)(1826), 8 May 1985**

(73) Patentinhaber : **ZAHNRADFABRIK**
**FRIEDRICHSHAFEN AKTIENGESELLSCHAFT**
**Löwentaler Strasse 100 Postfach 2520**
**W-7990 Friedrichshafen 1 (DE)**

(72) Erfinder : **SCHNEIDER, Rudolf**
**Dornierstrasse 19**
**W-7996 Meckenbeuren (DE)**

EP 0 360 819 B1

## Beschreibung

Die Erfindung betrifft einen Antrieb für ein Lüfterrad, mit den Merkmalen:
– ein Antriebsrad wird ständig angetrieben,
– eine Reibkupplung verbindet das Lüfterrad mit dem Antriebsrad,
– eine Feder hält die Reibkupplung oberhalb einer Grenztemperatur geschlossen,
– ein Elektromagnet hält die Reibkupplung unterhalb einer Grenztemperatur offen,
– der Elektromagnet ist an einem Maschinengehäuse befestigt.

Mit einem Antrieb dieser Art kann erreicht werden:
– die Maschine erreicht schnell ihre Betriebstemperatur, weil in einer Warmlaufzeit ein Kühlluftstrom gering bleibt,
– die Temperatur bleibt immer begrenzt,
– eine Verlustarbeit zum Antrieb des Lüfterrades bleibt klein, weil das Lüfterrad nur zeitweise angetrieben wird,
– ein störendes Lüftergeräusch entsteht nur zeitweise.

Bei einem bekannten Antrieb dieser Art (US-PS 28 20 440) läuft das Lüfterrad oberhalb einer Grenztemperatur mit gleicher Drehzahl wie das Antriebsrad und unterhalb dieser Grenztemperatur nur mit geringer Drehzahl durch das Schleppdrehmoment der offenen Reibkupplung. Wenn ein Thermoschalter bei hoher Drehzahl des Antriebsrades beim Überschreiten der Grenztemperatur einen elektrischen Strom abschaltet und damit die Reibkupplung schließt, entsteht plötzlich ein starkes Geräusch, das oft alle anderen Geräusche übertönt. Dieses Geräusch stört besonders auch deshalb, weil es immer plötzlich austritt. Ebenso plötzlich wird aber auch ein Motor zusätzlich belastet und seine Drehzahl vermindert, ein Motor, der nicht nur das Antriebsrad zum Antrieb für das Lüfterrad, sondern hauptsächlich eine oft drehzahlempfindliche Arbeitsmaschine antreibt.

Der Erfindung liegt daher die Aufgabe zugrunde, einen Antrieb dieser Art zu schaffen, der die folgenden Forderungen erfüllt:
– das Lüftergeräusch ist so gering wie möglich,
– die Änderungen der Drehzahl des Lüfterrades vermindern nicht die Arbeitsqualität einer drehzahlempfindlichen Arbeitsmaschine,
– der Antrieb benötigt wenig Platz, besteht aus einfachen Bauteilen und läßt sich leicht zerlegen und zusammenbauen.

Diese Aufgabe wird mit den Merkmalen des Anspruches 1 erfüllt, weil die Reibkupplung mit strömendem Fluid gekühlt wird, dadurch dauerschlupffest ist, immer nur mit der notwendigen Drehzahl läuft, ihre Drehzahl stufenlos und wahlweise nur feinstufig ändert, und weil ihre Bauteile in besonders vorteilhafter Weise zueinander angeordnet sind.

Mit den Merkmalen der Ansprüche 2 bis 5 wird ein Antrieb nach der Erfindung in vorteilhafter Weise ausgestaltet:

Mit dem Merkmal nach Anspruch 2 bleibt die Reibkupplung ungestört durch magnetische Anziehungskräfte, die Verschleißpartikel in den Reibspalten festhalten könnten.

Mit dem Merkmal nach Anspruch 3 wird dieses Ziel noch sicherer erreicht. Damit bleibt der Verschleiß der Reibkupplung gering.

Mit den Merkmalen nach Anspruch 4 wird die Reibkupplung immer ausreichend gekühlt. Eine zusätzliche Fluidpumpe ist nicht nötig.

Mit den Merkmalen nach Anspruch 5 wird erreicht:
– daß der Antrieb des Antriebsrades mit geringen Verlusten erfolgt, weil ein Antrieb mit Vielkeilriemen nur geringe Walk- und Schlupfverluste aufweist,
– daß das Lüfterrad sehr ruhig läuft, weil die Lager wenig Spiel und eine breite Lagerbasis haben,
– daß das Fluid innerhalb und Schmutz außerhalb des Kupplungsgehäuses gehalten werden.

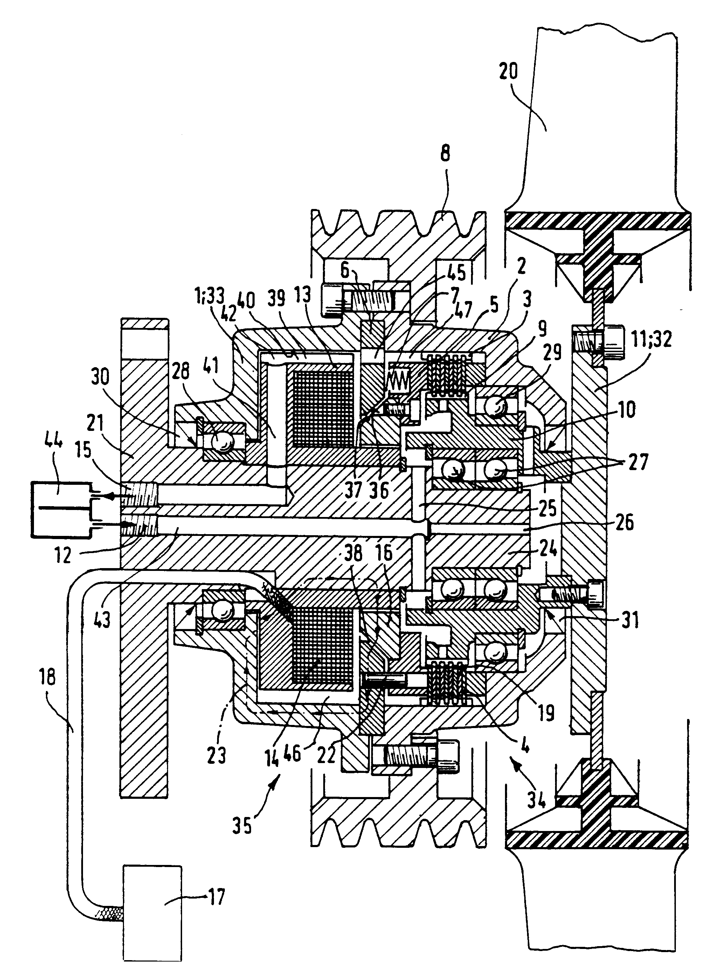

Die Zeichnung zeigt ein besonders vorteilhaftes Ausführungsbeispiel nach der Erfindung. Eine Achse 24 ist mit einem Flansch 21 an einem nicht dargestellten Maschinengehäuse befestigt. Zwei Schrägschulter-Kugellager 27 in O-Anordnung lagern eine Nabe 10 des Lüfterrades 32 auf der Achse 24. Lüfterschaufeln 20 sind über einen Schaufelträger 11 an der Nabe 10 befestigt. Ein erstes Rillenkugellager 28 lagert eine erste Schale 1 auf der Achse 24. Ein zweites Rillenkugellager 29 lagert eine zweite Schale 2 auf der Nabe 10. Eine Polscheibe 6 zentriert die Schalen 1, 2 zueinander. Die Schalen 1, 2 sind miteinander und mit der Polscheibe 6 fest verbunden und bilden ein Kupplungsgehäuse 33. Wellendichtringe 30, 31 in den Schalen 1, 2 dichten das Kupplungsgehäuse 33 gegen die Achse 24 und gegen die Nabe 10 ab. Ein Antriebsrad 8 ist an dem Kupplungsgehäuse 33 befestigt. Das Antriebsrad 8 ist eine Riemenscheibe für einen nicht dargestellten Vielkeilriemen.

In der ersten Schale 1 ist ein Elektromagnet 35 mit einer Magnetspule 14 in einem Spulengehäuse 13 auf der Achse 24 befestigt. Die zweite Schale 2 bildet einen Außenlamellenträger einer Reibkupplung 34 und trägt Außenlamellen 4. Die Nabe 10 bildet einen Innenlamellenträger der Reibkupplung 34 und trägt Innenlamellen 19. Federn 7 zwischen der Polscheibe 6 und einem Druckring 5 schließen die Reibkupplung 34. Der Druckring 5 ist über Stifte 22 drehfest mit der Polscheibe 6 verbunden. Der Druckring 5, die Nahe 10 und die zweite Schale 2 sind magnetisch nichtleitend. Ein Ankerring 16 ist mit dem Druckring 5 fest verbunden. Kegelige Oberflächen 36, 37 an der Polscheibe 6 und am Ankerring 16 bilden einen Arbeitsspalt 38. Eine Regeleinrichtung 17 kann über Leitungen 18 der Magnetspule 14 einen elektrischen Strom zuführen. Ein Strom in der Magnetspule 14 erzeugt einen Magnetfluß 23 durch das Spulengehäuse 13, durch die erste Schale 1, durch die Polscheibe 6 und durch den Ankerring 16 zurück zum Spulengehäuse 13. Der Magnetfluß 23 erzeugt eine Magnetkraft entgegen einer Kraft der Federn 7. Die Regeleinrichtung 17 empfängt mindestens ein Signal von mindestens einem Temperaturfühler und bewirkt, daß oberhalb einer oberen Grenztemperatur kein Strom fließt, daß unterhalb einer unteren Grenztemperatur ein größter Strom fließt, der ausreicht, um die Reibkupplung 34 ganz zu öffnen, und daß der Strom zwischen der oberen und unteren Grenztemperatur stufenlos und wahlweise in kleinen Stufen ansteigt.

Das Spulengehäuse 13 bildet außen eine schraubenförmige Abstreifkante 39 mit geringem Abstand zu einer Innenfläche 40 der ersten Schale 1. Die Abstreifkante 39 bildet mit der Innenfläche 40 eine Pumpe für ein Fluid zur Kühlung und Schmierung der Reibkupplung 34. Eine erste Fluidleitung 41 im Spulengehäuse 13 und in der Achse 24 verbindet eine Staukammer 42 vor der Abstreifkante 39 mit einem Auslaß 15 an dem Flansch 21 der Achse 24. Eine zweite Fluidleitung 43 in der Achse 24 verbindet einen Einlaß 12 an dem Flansch 21 mit Auslaßöffnungen 25, 26 im Bereich der Reibkupplung 34. Ein Wärmetauscher 44 ist an den Auslaß 15 und an den Einlaß 12 angeschlossen. Durchbrüche 45, außen in der Polscheibe 6, verbinden Hohlräume 46, 47 der Schalen 1, 2.

Bezugzeichen

| 1 | erste Schale | first shell |
|---|---|---|
| 2 | zweite Schale | second shell |
| 3 | Mitnahmezahn | drive key |
| 4 | Außenlamelle | outer disc |
| 5 | Druckring | actuating ring |
| 6 | Polscheibe | pole washer |
| 7 | Feder | spring |
| 8 | Antriebsrad | drive rotor |
| 9 | Mitnahmezahn | drive key |
| 10 | Nabe | hub |
| 11 | Schaufelträger | blade carrier |
| 12 | Einlaß | inlet |
| 13 | Spulengehäuse | coil case |
| 14 | Magnetspule | magnet coil |
| 15 | Auslaß | outlet |
| 16 | Ankerring | armature ring |
| 17 | Regeleinrichtung | control device |
| 18 | Leitungen | leads |
| 19 | Innenlamelle | inner disc |
| 20 | Lüfterschaufel | fan blade |
| 21 | Flansch | flange |
| 22 | Stift | pin |
| 23 | Magnetfluß | magnetic flux |
| 24 | Achse | support |
| 25 | Auslaßöffnung | outlet orifice |
| 26 | Auslaßöffnung | outlet orifice |
| 27 | Schrägschulter-Kugellager | detachable bias ball bearing |
| 28 | Rillenkugellager | ball bearing |
| 29 | Rillenkugellager | ball bearing |
| 30 | Wellendichtring | shaft seal ring |
| 31 | Wellendichtring | shaft seal ring |
| 32 | Lüfterrad | fan rotor |
| 33 | Kupplungsgehäuse | clutch case |

| 34 | Reibkupplung | friction clutch |
| 35 | Elektromagnet | electromagnet |
| 36 | Oberfläche | surface |
| 37 | Oberfläche | surface |
| 38 | Arbeitsspalt | working gap |
| 39 | Abstreifkante | stripping edge |
| 40 | Innenfläche | inner surface |
| 41 | Fluidleitung | fluid duct |
| 42 | Staukammer | ram pressure region |
| 43 | Fluidleitung | fluid duct |
| 44 | Wärmetauscher | heat exchanger |
| 45 | Durchbruch | opening |
| 46 | Hohlraum | cavity |
| 47 | Hohlraum | cavity |

## Patentansprüche

1. Antrieb für ein Lüfterrad, mit den Merkmalen:
– ein Antriebsrad (8) wird ständig angetrieben,
– eine Reibkupplung (34) verbindet das Lüfterrad (32) mit dem Antriebsrad (8),
– eine Feder (7) hält die Reibkupplung (34) oberhalb einer Grenztemperatur geschlossen,
– ein Elektromagnet (35) hält die Reibkupplung (34) unterhalb einer Grenztemperatur offen,
– der Elektromagnet (35) ist an einem Maschinengehäuse befestigt.
**gekennzeichnet** durch die Merkmale:
– ein Flansch (21) mit einer Achse (24) ist an dem Maschinengehäuse befestigt,
– eine Nabe (10) des Lüfterrades (32) ist auf der Achse (24) gelagert,
– eine erste und eine zweite Schale (1, 2) bilden ein Kupplungsgehäuse (33) für die Reibkupplung (34),
– das Kupplungsgehäuse (33) trägt das Antriebsrad (8),
– eine Polscheibe (6) zentriert die Schalen (1, 2) zueinander,
– die Polscheibe (6) ist mit den Schalen (1, 2) fest verbunden,
– die erste Schale (1) ist auf der Achse (24) gelagert,
– die zweite Schale (2) ist auf der Nabe (10) gelagert,
– der Elektromagnet (35) ist in der ersten Schale (1) angeordnet,
– die Reibkupplung (34) ist in der zweiten Schale (2) angeordnet,
– die Reibkupplung (34) ist eine Lamellenkupplung,
– die Nabe (10) bildet einen Innenlamellenträger für Innenlamellen (19),
– die zweite Schale (2) bildet einen Außenlamellenträger für Außenlamellen (4),
– ein strömendes Fluid kühlt und schmiert die Reibkupplung (34),
– ein axial beweglicher Druckring (5) der Reibkupplung (34) ist drehfest mit der Polscheibe (6) und fest mit einem Ankerring (16) verbunden,
– kegelige Oberflächen (36, 37) der Polscheibe (6) und des Ankerringes (16) bilden einen Arbeitsspalt (38),
– die Feder (7) ist zwischen dem Druckring (5) und der Polscheibe (6) angeordnet,
– ein elektrischer Strom in einer Magnetspule (14) in einem Spulengehäuse (13) des Elektromagneten (35) erzeugt einen Magnetfluß (23) durch das Spulengehäuse (13), durch die erste Schale (1), durch die Polscheibe (6) und durch den Ankerring (16) zurück zum Spulengehäuse (13),
– eine Regeleinrichtung (17) empfängt mindestens ein Signal von mindestens einem Temperaturfühler und bewirkt, daß oberhalb einer oberen Grenztemperatur kein Strom fließt, daß unterhalb einer unteren Grenztemperatur ein größter Strom fließt und daß der Strom von der oberen zur unteren Grenztemperatur stufenlos und wahlweise in kleinen Stufen ansteigt.

2. Antrieb nach Anspruch 1, mit dem Merkmal: der Druckring (5) ist magnetisch nichtleitend.

3. Antrieb nach Anspruch 1, mit dem Merkmal: der Druckring (5), die Nabe (10) und die zweite Schale (2) sind magnetisch nichtleitend.

4. Antrieb nach Anspruch 1, mit den Merkmalen:
– das Spulengehäuse (13) bildet außen eine schraubenförmige Abstreifkante (39) mit geringem Abstand zu einer Innenfläche (40) der ersten Schale (1),
– die Abstreifkante (39) bildet mit der Innenfläche (40) eine Pumpe für das Fluid,
– eine erste Fluidleitung (41) im Spulengehäuse (13) und in der Achse (24) verbindet eine Staukammer (42) vor der Abstreifkante (39) mit einem Auslaß (15) an dem Flansch (21),
– eine zweite Fluidleitung (43) in der Achse (24) verbindet einen Einlaß (12) an dem Flansch (21) mit Auslaßöffnungen (25, 26) im Bereich der Reibkupplung (34),
– ein Wärmetauscher (44) ist an den Auslaß (15) und an den Einlaß (12) angeschlossen,
– Durchbrüche (45) außen in der Polscheibe (6) verbinden Hohlräume (46, 47) der Schalen (1, 2).

5. Antrieb nach Anspruch 1, mit den Merkmalen:
– das Antriebsrad (8) ist eine Riemenscheibe für einen Vielkeilriemen,
– zwei Schrägschulter-Kugellager (27) in O-Anordnung lagern die Nabe (10),
– einfache Rillenkugellager (28, 29) lagern die Schalen (1, 2),
– Wellendichtringe (30, 31) in den Schalen (1, 2) dichten das Kupplungsgehäuse (33) ab.

## Claims

1. A drive for a fan rotor, having the following features:
– a drive rotor (8) is constantly driven,
– a friction clutch (34) connects the fan rotor (32) with the drive rotor (8),
– a spring (7) holds the friction clutch (34) closed above a threshold temperature,
– an electromagnet (35) holds the friction clutch (34) open below a threshold temperature,
– the electromagnet (35) is secured to a machine housing.
characterised by the following features:
– a flange (21) having a support (24) is secured to the machine housing,
– a hub (10) of the fan rotor (32) is mounted on the support (24),
– a first and a second shell (1, 2) form a clutch case (33) for the friction clutch (34),
– the clutch case (33) supports the drive rotor (8),
– a pole washer (6) centres the shells (1, 2) relative to one another,
– the pole washer (6) is securely connected with the shells (1, 2),
– the first shell (1) is mounted on the support (24),
– the second shell (2) is mounted on the hub (10),
– the electromagnet (35) is arranged in the first shell (1),
– the friction clutch (34) is arranged in the second shell (2),
– the friction clutch (34) is a multi-disc clutch,
– the hub (10) forms an inner disc support for inner discs (19),
– the second shell (2) forms an outer disc support for outer discs (4),
– a flowing fluid cools and lubricates the friction clutch (34),
– an axially movable actuating ring (5) of the friction clutch (34) is rotationally rigidly connected with the pole washer (6) and rigidly connected with an armature ring (16),
– conical surfaces (36, 37) of the pole washer (6) and of the armature ring (16) form a working gap (38),
– the spring (7) is arranged between the actuating ring (5) and the pole washer (6),
– an electrical current in a magnet coil (14) in a coil case (13) of the electromagnet (35) generates a magnetic flux (23) through the coil case (13), through the first shell (1), through the pole washer (6) and through the armature ring (16) back to the coil case (13),
– a control device (17) receives at least one signal from at least one temperature sensor and ensures that no current flows above an upper threshold temperature, that a maximum current flows below a lower threshold temperature and that the current increases gradually and optionally in small stages from the upper to lower threshold temperature.

2. A drive according to claim 1, having the following feature: the actuating ring (5) is magnetically non-conductive.

3. A drive according to claim 1, having the following feature: the actuating ring (5), the hub (10) and the second shell (2) are magnetically non-conductive.

4. A drive according to claim 1, having the following features:

– on the outside, the coil case (13) forms a helical stripping edge (39) at a short distance from an inner surface (40) of the first shell (1),

– together with the inner surface (40), the stripping edge (39) forms a pump for the fluid,

– a first fluid duct (41) in the coil case (13) and in the support (24) connects a ram pressure region (42) upstream of the stripping edge (39) with an outlet (15) in the flange (21),

– a second fluid duct (43) in the support (24) connects an inlet (12) in the flange (21) with outlet orifices (25, 26) in the region of the friction clutch (34),

– a heat exchanger (44) is connected to the outlet (15) and the inlet (12),

– openings (45) on the outside of the pole washer (6) connect cavities (46, 47) of the shells (1, 2).

5. A drive according to claim 1, having the following features:

– the drive rotor (8) is a belt pulley for a multi-spline belt,

– two bevelled-shoulder ball bearings (27) in an O-arrangement support the hub (10),

– simple grooved ball bearings (28, 29) support the shells (1, 2),

– shaft seal rings (30, 31) in the shells (1, 2) seal off the clutch case (33).


**Revendications**

1. Entraînement d'un rotor de ventilateur, dans lequel :

– une roue d'entraînement (8) est entraînée en permanence,

– un embrayage à friction (34) relie le rotor (32) à la roue d'entraînement (8),

– un ressort (7) maintient l'embrayage (34) fermé au-dessus d'une température limite,

– un électro-aimant (35) maintient l'embrayage (34) ouvert au-dessous d'une température limite,

– l'électro-aimant (35) est fixé à un carter de machine,

caractérisé en ce que :

– un flasque (21) pourvu d'un axe (24) est fixé au carter de machine,

– un moyeu (10) du rotor (32) est monté sur l'axe (24) par un palier,

– une première et une seconde coque (1, 2) forment un boîtier (33) de l'embrayage (34),

– le boîtier d'embrayage (33) porte la roue d'entraînement (8),

– un disque polaire (6) centre mutuellement les coques (1, 2),

– le disque polaire (6) est fixé aux coques (1, 2),

– la première coque (1) est montée sur l'axe (24) par un palier,

– la seconde coque (2) est montée sur le moyeu (10) par un palier,

– l'électro-aimant (35) est disposé dans la première coque (1),

– l'embrayage (34) est disposé dans la seconde coque (2),

– l'embrayage ( 34) est un embrayage multidisque,

– le moyeu (10) forme un porte-disques intérieur pour des disques intérieurs (19),

– la seconde coque (2) forme un porte-disques extérieur pour des disques extérieurs (4),

– un circuit de fluide refroidit et lubrifie l'embrayage (34),

– une bague de poussée (5) de l'embrayage (34), mobile axialement, est solidaire en rotation du disque polaire (6) et fixée à une bague d'armature (16),

– des surfaces coniques (36, 37) du disque polaire (6) et de la bague d'armature (16) définissent un intervalle de travail (38),

– le ressort (7) est placé entre la bague de poussée (5) et le disque polaire (6),

– un courant électrique circulant dans une bobine (14) dans un boîtier de bobine (13) de l'électro-aimant (35) produit un flux magnétique (23) passant dans le boîtier de bobine (13), la première coque (1), le disque polaire (6) et la bague d'armature (16) pour revenir au boîtier de bobine (13),

– un régulateur (17) reçoit au moins un signal d'au moins un capteur de température et a pour effet qu'au-dessus d'une limite supérieure de température, aucun courant ne circule, qu'au-dessous d'une limite inférieure de température, un courant maximal circule, et que le courant croît en continu ou sélectivement par petits paliers de la limite supérieure à la limite inférieure de température.

2. Entraînement selon la revendication 1, dans lequel la bague de poussée (5) est magnétiquement imperméable.

3. Entraînement selon la revendication 1, dans lequel la bague de poussée (5), le moyeu (10) et la seconde coque (2) sont magnétiquement imperméables.

4. Entraînement selon la revendication 1, dans lequel :

– le boîtier de bobine (13) comporte extérieurement une ailette hélicoïdale ( 39) s'étendant à faible distance d'une surface intérieure (40) de la première coque (1),

– l'ailette (39) forme avec ladite surface (40) une pompe pour le fluide,

– un premier conduit de fluide (41) ménagé dans le boîtier de bobine (13) et dans l'axe (24) relie une chambre de refoulement (42) située devant l'ailette (39) à une sortie (15) dans le flasque (21),

– un second conduit de fluide (43) ménagé dans l'axe (24) relie une entrée (12) dans le flasque (21) à des orifices de sortie (25, 26) dans la zone de l'embrayage (34),

– un échangeur de chaleur (44) est raccordé à ladite sortie (15) et à ladite entrée (12),

– des trous (45) traversant la partie extérieure du disque polaire (6) relient des cavités (46, 47) des coques (1, 2).

5. Entraînement selon la revendication 1, dans lequel :

– la roue d'entraînement (8) est une poulie pour une courroie à nervures trapézoïdales multiples,

– le moyeu (10) est monté sur deux roulements à billes à épaulements obliques (27) à disposition opposée,

– les coquilles (1, 2) sont montées sur de simples roulements à billes à gorges (28, 29),

– l'étanchéité du boîtier d'embrayage (33) est assurée par des joints d'arbre (30, 31) montés dans les coques (1, 2).